# FASCICULE DE BREVET EUROPEEN

(11) **EP 0 873 251 B1**
(45) Date de publication et mention de la délivrance du brevet: **22.03.2000**
(21) Numéro de dépôt: 97901112.9
(22) Date de dépôt: 17.01.1997
(51) Int. Cl.: B60J 5/06

(54) **PERFECTIONNEMENT AUX PAROIS SOUPLES POUR CARROSSERIES DE VEHICULES NOTAMMENT**
VERBESSERUNG AN FLEXIBLEN WÄNDEN INSBESONDERE FÜR FAHRZEUGKAROSSERIEN
IMPROVEMENTS TO FLEXIBLE WALLS, IN PARTICULAR FOR VEHICLE BODYWORK

(30) Priorité: 19.01.1996 FR 9600771
(43) Date de publication de la demande: 28.10.1998
(73) Titulaire: Fair International, 44240 La Chapelle sur Erdre (FR)
(72) Inventeur: BLOND, Jean, F-44390 Nort-sur-Erdre (FR)
(74) Mandataire: Phélip, Bruno
(86) Numéro de dépôt international: FR9700094
(87) Numéro de publication internationale: WO9726146

(56) Documents cités:
- EP-A- 0 292 098
- EP-A- 0 311 242
- EP-A- 0 424 276
- WO-A-89/00934
- GB-A- 2 161 851
- GB-A- 2 174 136

## Description

La présente invention concerne un perfectionnement aux parois souples en toile plastique qui équipent notamment des carrosseries de véhicules, mais que l'on peut aussi rencontrer dans des bâtiments provisoires ou autres.

Ces parois souples ou rideaux sont suspendus aux rails supérieurs de la carrosserie, tendus au niveau de leurs extrémités latérales par des moyens appropriés et leur bord inférieur est fixé au moyen de sangles sur la rive du plancher de la carrosserie.

L'invention permet, comme dans le cas de la paroi décrite dans le document GB-A-2 161 851, d'améliorer la sécurité des marchandises transportées, lesquelles marchandises sont protégées contre, notamment, les actes de dégradation, de vandalisme et/ou les vols. Cette protection résulte dans le cas du document précité, d'une véritable double paroi :
- la paroi ou rideau classique,
- une doublure en forme de toile armée et dont les rebords sont fixés à ladite paroi classique.

La présente invention propose un perfectionnement qui, en plus de la protection, permet d'améliorer l'aspect de ce type de rideau.

La paroi selon l'invention comporte sur l'une de ses faces, de préférence la face interne, un treillis formé de rubans collés ou soudés verticalement et horizontalement, lesquels rubans, réalisés en un matériau compatible avec celui du rideau, du genre PVC, comportent une âme centrale continue en matériau du type acier à grande résistance au cisaillement et à l'allongement.

Selon une variante de réalisation, le treillis peut également être pré-assemblé et être ensuite fixé sur la paroi du rideau au moyen d'un film thermosoudable.

Selon l'invention, la maille du treillis comporte une largeur de l'ordre de 10 cm et une hauteur de 10 à 20 cm par exemple, de façon à conserver une bonne souplesse pour le rideau.

Toujours selon l'invention, le matériau constituant l'âme centrale des rubans PVC, se présente sous la forme d'un fil ou micro-câble lisse ou rugueux, ou encore sous la forme d'une tresse métallique, ou encore sous la forme d'un feuillard.

Dans son application aux carrosseries de véhicules, la paroi souple se présente sous la forme d'un rideau coulissant à sa partie supérieure, coopérant avec la structure de la carrosserie du véhicule, lequel rideau comporte : - des organes de coulissement disposés à sa partie supérieure, - des organes d'accrochage aux extrémités latérales pour permettre d'exercer une forte tension longitudinale et - des organes d'accrochage répartis régulièrement à la partie inférieure dudit rideau pour le tendre verticalement et le fixer sur la rive du plancher ; lesquels organes d'accrochage sont constitués de sangles élastiques interposées entre une patte d'ancrage solidaire du rideau à sa partie inférieure et un crochet coopérant avec la rive du plancher.

Selon une autre disposition de l'invention, la patte supérieure des organes d'accrochage comporte des moyens de fixation sur le rideau constitués de boulons qui serrent ladite patte et le rideau par l'intermédiaire d'une platine de renfort collée et/ou soudée sur la paroi, sur sa face interne.

Toujours selon l'invention, la platine de renfort pour l'ancrage de la patte supérieure de chaque organe d'accrochage, est de préférence constituée d'une plaque métallique enrobée de PVC.

Selon une autre disposition de l'invention, l'organe d'accrochage comporte à sa partie inférieure deux pièces identiques fixées dos à dos formant d'un côté un crochet qui coopère avec la rive du plancher de la carrosserie et, de l'autre côté une poignée de manoeuvre de l'organe d'accrochage.

Selon une variante de réalisation, la partie inférieure de l'organe d'accrochage comporte un crochet et, sous ce crochet, une poignée de manoeuvre.

Toujours selon l'invention, le crochet comporte un anneau ou tube permettant le passage d'un organe de verrouillage pour réaliser des scellés.

Mais l'invention sera encore détaillée à l'aide de la description suivante et des dessins annexés, donnés à titre indicatif, et dans lesquels :
- la figure 1 représente, de façon schématique, la face externe d'une paroi souple constituant un rideau de carrosserie de véhicule ;
- la figure 2 représente une portion de treillis susceptible d'être fixé ou soudé sur la paroi interne du rideau représenté figure 1 ;
- la figure 3 représente une section agrandie d'une bande constituant le treillis, appliquée contre le rideau ;
- la figure 4 représente un organe d'accrochage susceptible d'être disposé à la partie inférieure du rideau, vu de face ;
- la figure 5 représente vu de côté, un organe d'accrochage fixé sur le rideau et en position normale d'accrochage, fixé en rive sur le plancher de la carrosserie.

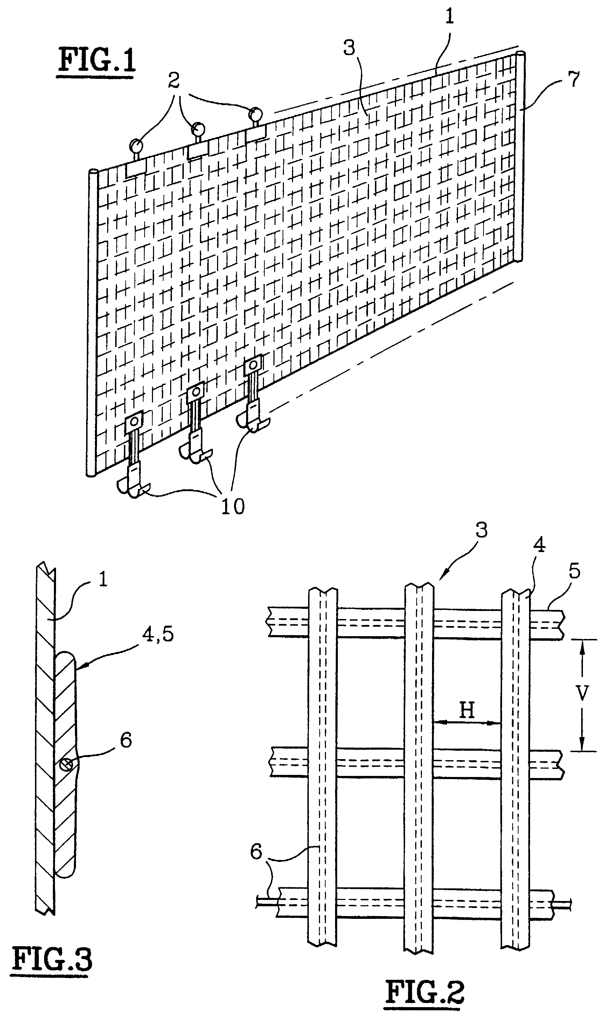

Le rideau représenté figure 1 est constitué d'une toile 1 suspendue, au moyen d'une multitude de galets 2, à la structure de la carrosserie d'un véhicule non représenté.

La toile constituant ce rideau est réalisée en tissu imprégné de plastique.

Pour améliorer sa capacité à faire l'objet de tension aussi bien longitudinale que verticale, cette toile est revêtue, de préférence sur la face interne, d'un treillis 3 constitué d'une multitude de rubans verticaux 4 et horizontaux 5. Ce treillis peut être façonné et collé ou soudé directement sur la toile ou être pré-assemblé et fixé ensuite sur ladite toile directement et/ou au moyen d'un film plastique complémentaire non représenté, thermosoudable par exemple.

Ces rubans 4 et 5 ont, comme représenté figure 3, une faible épaisseur et une largeur qui est de l'ordre de quelques millimètres, 5 à 10 par exemple, et sont réalisés en matériau compatible avec celui du rideau, par exemple en PVC, pour pouvoir être soudés sur le rideau 1 ou collés, selon le cas.

Ces rubans comportent une âme centrale continue 6 en matériau résistant à l'allongement et au cisaillement comme par exemple de l'acier.

Cette âme 6 est constituée d'un fil d'acier, ou d'un micro-câble, ou encore d'une tresse métallique ou même d'un feuillard. Le ruban 4, 5 sert d'interface de liaison entre l'âme 6 et la toile du rideau 1.

Le treillis 3 forme une sorte d'armature, sur la face interne du rideau et améliore les possibilités de tension du rideau aussi bien horizontalement que verticalement.

De préférence, les rubans horizontaux sont espacés d'une distance V de l'ordre de 10 à 20 cm alors que les rubans verticaux sont eux espacés d'une distance H de l'ordre de 10 cm par exemple, formant une maille carrée ou rectangulaire.

Le treillis constitue aussi une protection contre les agressions, comme par exemple une grande lacération de la toile. Cette protection permet notamment d'éviter les grosses dégradations et le vol de marchandises.

Ce treillis est également associé aux différents organes qui assurent la liaison entre le rideau et la structure de la carrosserie du véhicule.

La tension longitudinale horizontale du rideau s'effectue par l'intermédiaire des joncs 7 disposés à chaque extrémité verticale. Ces joncs sont soudés ou collés sur la toile et coopèrent avec la structure de la carrosserie, non représentée.

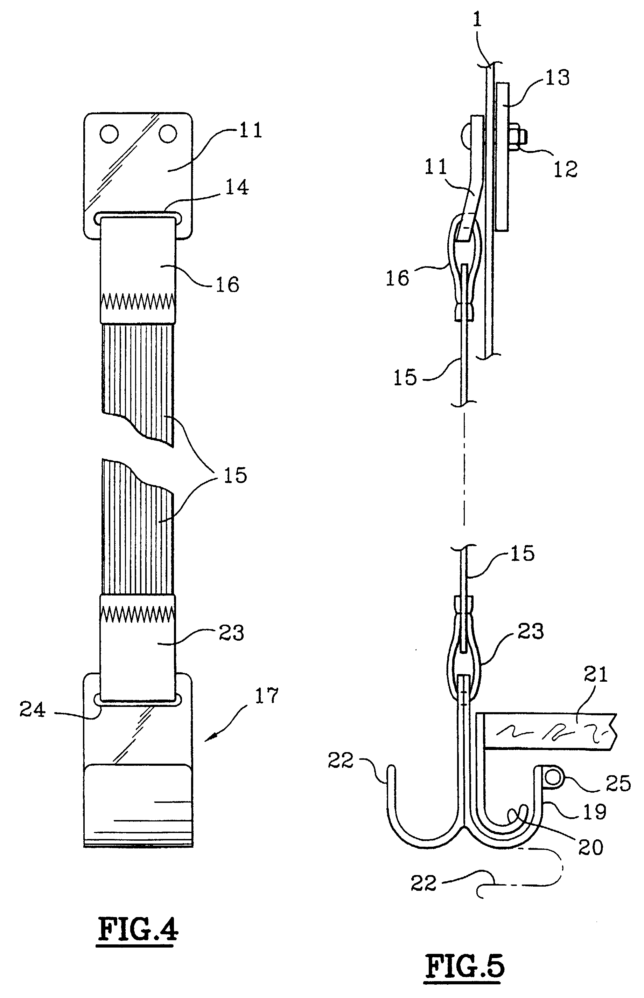

La tension verticale du rideau est réalisée au moyen d'organes d'accrochage 10 régulièrement répartis à la partie inférieure du rideau. La figure 4 représente, vu de face, l'un de ces organes d'accrochage 10. Cet organe d'accrochage est constitué d'une patte d'ancrage 11 en métal léger par exemple. Cette patte d'ancrage est fixée, comme représenté figure 5, au moyen d'une paire de boulons 12 par exemple.

Cette fixation s'effectue directement sur le rideau 1, à sa partie inférieure, lequel rideau étant enserré entre la patte 11 et une platine 13 disposée sur la face interne du rideau. Cette platine 13 est de préférence constituée d'une plaque métallique enrobée de PVC et elle est soudée ou collée sur la face interne du rideau.

La patte 11 comporte, à sa partie inférieure, une fente 14 qui permet l'ancrage d'une sangle élastique 15 au moyen d'une portion de sangle tissée ordinaire 16, avec laquelle elle est par exemple cousue.

La sangle souple se présente sous la forme d'une bande dont la largeur est de l'ordre de quelques centimètres. On dispose, de préférence, cette sangle en double épaisseur pour atteindre des résistances qui s'apparentent à celles de la sangle tissée ordinaire.

On peut également utiliser des câbles en caoutchouc du type de ceux utilisés dans les extenseurs.

L'organe d'accrochage 10 comporte à sa partie inférieure une pièce 17 constituée de deux pièces identiques accolées dos à dos formant d'un côté un crochet 19 qui coopère avec la rive 20 du plancher 21 de la carrosserie. Au dos du crochet 19, on trouve une pièce analogue qui forme une poignée 22 permettant de manoeuvrer l'organe d'accrochage et en particulier d'exercer une tension sur la sangle élastique 15.

La sangle élastique 15 est fixée, comme à sa partie supérieure, au moyen d'une portion de sangle tissée 23 qui passe dans une fente 24 aménagée dans la pièce 17.

La poignée 22 peut également se situer sous le crochet 19 comme représenté en traits mixtes fins pour réduire de façon notable l'encombrement extérieur.

Le crochet 19 peut aussi comporter un anneau ou tube 25 pour accueillir le câble de verrouillage et de pose scellés.

## Revendications

1. Paroi souple en toile plastifiée comportant des moyens de renforcement et/ou de lutte contre le vandalisme, caractérisée en ce qu'elle comporte un treillis (3) formé de rubans collés ou soudés verticalement et horizontalement sur la face plastifiée, lesquels rubans (4, 5) réalisés en matériau du genre PVC compatible avec ladite face, comportent une âme centrale continue en matériau du type acier, de grande résistance au cisaillement et à l'allongement.

2. Paroi souple selon la revendication 1, caractérisée en ce que le treillis (3) est pré-assemblé et fixé à ladite paroi au moyen d'un film thermosoudable.

3. Paroi souple selon l'une quelconque des revendications 1 ou 2, caractérisée en ce que la maille du treillis (3) comporte une largeur H de l'ordre de 10 cm et une hauteur V de l'ordre de 10 à 20 cm.

4. Paroi souple selon l'une quelconque des revendications 1 à 3, caractérisée en ce que l'âme centrale (6) du ruban (4, 5) est constituée d'un fil ou micro-câble lisse ou rugueux.

5. Paroi souple selon l'une quelconque des revendications 1 à 3, caractérisée en ce que l'âme centrale (6) du ruban (4, 5) est constituée d'une tresse métallique.

6. Paroi souple selon l'une quelconque des revendications 1 à 3, caractérisée en ce que l'âme centrale (6) du ruban (4, 5) est constituée d'un feuillard.

7. Paroi souple selon l'une quelconque des revendications 1 à 6, formant un rideau coulissant coopérant avec une structure de carrosserie de véhicule ou autre, comportant des organes de coulissement (2) à sa partie supérieure, des organes d'accrochage (7) aux extrémités latérales permettant d'exercer une tension longitudinale sur ledit rideau et des organes d'accrochage (10) régulièrement répartis à sa partie inférieure pour le fixer sur le bord du plancher de ladite carrosserie, caractérisée en ce que lesdits organes d'accrochage (10) sont constitués de sangles élastiques (15) interposées entre une patte d'ancrage (11) solidaire dudit rideau, à sa partie inférieure, et une pièce (17) formant crochet coopérant avec la rive (20) dudit plancher.

8. Paroi souple selon la revendication 7, caractérisée en ce que l'organe d'ancrage (10) comporte une patte supérieure (11) solidaire du rideau (1), au moyen de boulons (12), lequel rideau est pincé entre ladite patte et une platine (13) de renfort collée et/ou soudée sur la face interne dudit rideau.

9. Paroi souple selon la revendication 8, caractérisée en ce que la platine (13) est constituée d'une plaque métallique enrobée de PVC compatible avec le matériau du rideau.

10. Paroi souple selon l'une quelconque des revendications 7 à 9, caractérisée en ce que l'organe d'accrochage (10) comporte une pièce (17) constituée de deux pièces quasi identiques fixées dos à dos formant pour l'une un crochet (19) et pour l'autre une poignée de manoeuvre (22).

11. Paroi souple selon la revendication 10, caractérisée en ce que la pièce d'accrochage (17) est constituée d'un crochet (19) et d'une poignée (22) aménagée sous ledit crochet.

12. Paroi souple selon l'une quelconque des revendications 10 ou 11, caractérisée en ce que le crochet (19) comporte un tube ou anneau (25) permettant le verrouillage et la pose de scellés.

## Patentansprüche

1. Flexible Wand aus plastifiziertem Leinen, umfassend Mittel zur Verstärkung und/oder zur Bekämpfung von Vandalismus, dadurch gekennzeichnet, dass sie ein Gitter (3) umfasst, das von vertikal und horizontal auf der plastifizierten Fläche verklebten oder verschweißten Bändern gebildet ist, wobei die Bänder (4, 5), die aus einem mit der Fläche verträglichen PVC-artigen Material hergestellt sind, eine durchgehende Mittelader aus einem Material vom Typ Stahl mit großer Scher- und Dehnfestigkeit umfassen.

2. Flexible Wand nach Anspruch 1, dadurch gekennzeichnet, dass das Gitter (3) vorgefertigt und an der Wand mit Hilfe einer heißsiegelfähigen Folie befestigt ist.

3. Flexible Wand nach einem der Ansprüche 1 oder 2, dadurch gekennzeichnet, dass die Masche des Gitters (3) eine Breite H in der Größenordnung von 10 cm und eine Höhe V in der Größenordnung von 10 bis 20 cm aufweist.

4. Flexible Wand nach einem der Ansprüche 1 bis 3, dadurch gekennzeichnet, dass die Mittelader (6) des Bandes (4, 5) aus einem glatten oder rauhen Draht oder Mikrokabel gebildet ist.

5. Flexible Wand nach einem der Ansprüche 1 bis 3, dadurch gekennzeichnet, dass die Mittelader (6) des Bandes (4, 5) aus einem metallischen Geflecht gebildet ist.

6. Flexible Wand nach einem der Ansprüche 1 bis 3, dadurch gekennzeichnet, dass die Mittelader (6) des Bandes (4, 5) aus einem Stahlband gebildet ist.

7. Flexible Wand nach einem der Ansprüche 1 bis 6, die einen Gleitvorhang bildet, der mit einer Fahrzeugkarosseriestruktur oder dergleichen zusammenwirkt, umfassend Gleitmittel (2) an ihrem oberen Teil, Befestigungselementen (7) an den seitlichen Enden, die es ermöglichen, einen Längszug auf den Vorhang auszuüben, und Befestigungsmittel (10), die regelmäßig an seinem unteren Teil verteilt sind, um ihn am Rand des Bodens der Karosserie zu befestigen, dadurch gekennzeichnet, dass die Befestigungselemente (10) aus elastischen Gurten (15) gebildet sind, die zwischen einer Verankerungsplatte (11), die mit dem Vorhang an seinem unteren Teil fest verbunden ist, und einem Teil (17) angeordnet sind, der einen Haken bildet, welcher mit der Seitenleiste (20) des Bodens zusammenwirkt.

8. Flexible Wand nach Anspruch 7, dadurch gekennzeichnet, dass das Befestigungselement (10) eine obere Verankerungsplatte (11) umfasst, die mit dem Vorhang (1) mit Hilfe von Bolzen (12) verbunden ist, wobei der Vorhang zwischen der Platte und einer Verstärkungsplatine (13) eingeklemmt ist, die an der Innenseite des Vorhanges angeklebt und/oder angeschweißt ist.

9. Flexible Wand nach Anspruch 8, dadurch gekennzeichnet, dass die Verstärkungsplatine (13) aus einer mit PVC überzogenen Metallscheibe, die mit dem Material des Vorhanges verträglich ist, gebildet ist.

10. Flexible Wand nach einem der Ansprüche 7 bis 9, dadurch gekennzeichnet, dass das Befestigungselement (10) ein Teil (17) umfasst,as aus zwei quasi identischen Teilen gebildet ist, die Rücken an Rücken befestigt sind, wobei der eine einen Haken (19) und der andere einen Betätigungsgriff (22) bildet.

11. Flexible Wand nach Anspruch 10, dadurch gekennzeichnet, dass das Befestigungsteil (17) aus einem Haken (19) und einem Griff (22) gebildet ist, der unter dem Haken angeordnet ist.

12. Flexible Wand nach einem der Ansprüche 10 oder 11, dadurch gekennzeichnet, dass der Haken (19) ein Rohr oder einen Ring (25) für die Verriegelung und die Anbringung von Schlössern umfasst.

## Claims

1. A flexible wall in plastic canvas comprising means for strengthening the material and/or combating vandalism, characterised in that it comprises a network (3) formed of ribbons glued or welded vertically and horizontally onto the plastic surface, said ribbons (4, 5) being made of a material of the PVC type and compatible with the said surface, having a continuous central core in a material of the steel type, with high resistance to shear and elongation.

2. A flexible wall according to claim 1, characterised in that the network (3) is pre-assembled and fixed to the said wall by means of a heat-welded film.

3. A flexible wall according to any one of claims 1 or 2, characterised in that the mesh of the network (3) has a width (H) of the order of 10 cm and a height (V) of the order of 10 to 20 cm.

4. A flexible wall according to any one of claims 1 to 3, characterised in that the central core (6) of the ribbon (4, 5) is made of a smooth or rough wire or micro-cable.

5. A flexible wall according to any one of claims 1 to 3, characterised in that the central core (6) of the ribbon (4, 5) is made of a metal braid.

6. A flexible wall according to any one of claims 1 to 3, characterised in that the central core (6) of the ribbon (4, 5) is made of a metal strip.

7. A flexible wall according to any one of claims 1 to 6, forming a sliding curtain which fits onto the body of a vehicle or other, having sliding means (2) at the top, attachment means (7) at the sides in order to exert longitudinal tension on the said curtain, and attachment means (10) placed at regular intervals along its bottom end, to secure it to the floor of the said vehicle body, characterised in that the said attachment means (10) are made of elastic straps (15) interposed between an anchoring lug (11) integral with the said curtain at the lower part thereof and a part (17) forming a hook, fitting onto the edge (20) of the said floor.

8. A flexible wall according to claim 7, characterised in that the anchoring means (10) has an upper lug (11) attached to the curtain (1) by means of bolts (12), said curtain being clamped between the said lug and a strengthening plate (13) which is glued and/or welded to the inner surface of the said curtain.

9. A flexible wall according to claim 8, characterised in that the plate (13) is made of a metal plate covered with a PVC material, which is compatible with the material of the curtain.

10. A flexible wall according to any one of claims 7 to 9, characterised in that the attachment means (10) has a part (17) made of two virtually identical parts fixed back to back forming a hook (19) in one case, and an operating handle (22) in the other.

11. A flexible wall according to claim 10, characterised in that the attachment means (17) is made of a hook (19) and a handle (22) provided under the said hook.

12. A flexible wall according to any one of claims 10 or 11, characterised in that the hook (19) has a tube or a ring (25) used for locking purposes and for fitting a seal.
